# EUROPEAN PATENT SPECIFICATION

(11) **EP 4 496 116 B1**
(45) Date of publication and mention of the grant of the patent: **03.06.2026**
(21) Application number: 22939642.9
(22) Date of filing: 06.07.2022
(51) Int. Cl.: H01P 1/161

(54) **ORTHOMODE TRANSDUCER AND DUAL-LINEARLY POLARIZED FEED SOURCE**
ORTHOMODALER WANDLER UND DUALLINEAR POLARISIERTE SPEISEQUELLE
TRANSDUCTEUR ORTHOMODE ET SOURCE D'ALIMENTATION À DOUBLE POLARISATION LINÉAIRE

(30) Priority: 25.04.2022 CN 202210442668
(43) Date of publication of application: 22.01.2025
(73) Proprietor: Chengdu T-Ray Technology Co., Ltd., Chengdu, Sichuan 610002 (CN)
(72) Inventor: ZHANG, Lin, Chengdu, Sichuan 610002 (CN); ZHENG, Kai, Chengdu, Sichuan 610002 (CN); HE, Yunlu, Chengdu, Sichuan 610002 (CN)
(74) Representative: Ciallié, Giorgio
(86) International application number: PCT/CN2022/104094
(87) International publication number: WO 2023/206814

(56) References cited:
- CN-A- 108 923 107
- CN-A- 110 581 364
- CN-A- 111 384 474
- CN-A- 112 103 656
- CN-A- 112 103 656
- US-A1- 2021 050 641
- SRIKANTH S ET AL: "A compact full waveguide band turnstile junction orthomode transducer", GENERAL ASSEMBLY AND SCIENTIFIC SYMPOSIUM, 2011 XXXTH URSI, IEEE, 13 August 2011 (2011-08-13), pages 1 - 4, XP032092046, ISBN: 978-1-4244-5117-3, DOI: 10.1109/URSIGASS.2011.6051292
- ARAMAKI Y ET AL: "Ultra-thin broadband omt with turnstile junction", 2003 IEEE MTT-S INTERNATIONAL MICROWAVE SYMPOSIUM DIGEST.(IMS 2003). PHILADELPHIA, PA, JUNE 8 - 13, 2003; [IEEE MTT-S INTERNATIONAL MICROWAVE SYMPOSIUM], NEW YORK, NY : IEEE, US, vol. 1, 8 June 2003 (2003-06-08), pages 47 - 50, XP010644469, ISBN: 978-0-7803-7695-3, DOI: 10.1109/MWSYM.2003.1210880
- RUIZ-CRUZ JORGE A.; MONTEJO-GARAI JOSE R.; LEAL-SEVILLANO CARLOS A.; REBOLLAR JESUS M.: "Development of folded dual-polarization dividers for broadband ortho-mode transducers", 2015 ASIA-PACIFIC MICROWAVE CONFERENCE (APMC), IEEE, vol. 2, 6 December 2015 (2015-12-06), pages 1 - 3, XP032868580, ISBN: 978-1-4799-8765-8, DOI: 10.1109/APMC.2015.7413067

## Description

### FIELD OF THE DISCLOSURE

This invention relates to the field of antenna technology, specifically to an orthomode transducer and a dual linear polarized feed.

### BACKGROUND OF THE DISCLOSURE

Dual-polarized antennas, capable of supporting two orthogonal polarization modes simultaneously, are widely used in satellite communications, radio astronomy, and electronic countermeasures. In testing systems, using dual-polarized antennas as feed sources can significantly reduce testing time and lower time costs. Currently, dual-polarized antennas are typically implemented using a corrugated horn and an orthomode transducer (OMT), where the former inputs a single signal's fundamental mode into two orthogonal ports and outputs two orthogonal dominant modes at a common port, ensuring all electrical ports are matched and there is high isolation between independent signals. The latter receives signals from the common port, producing a stable circular beam pattern. It is evident that port matching degree, dual-port isolation degree, and standing wave bandwidth are the main performance indicators affecting OMT. Additionally, as the frequency decreases, the device size increases, and since OMTs are cavity structures larger than corrugated horns, miniaturization of OMTs becomes a critical challenge when dual-polarized antennas operate at low frequencies.

From the perspective of structural symmetry in orthomode transducers, they can be broadly classified into three types. The first type of OMT transmits its own fundamental mode through two ports, directly feeding the two fundamental modes into a common waveguide for orthogonal transmission via a simple structure. This type of OMT has a narrow bandwidth but is structurally simple and cost-effective. The second type of OMT, also known as the BΦifot structure. In this structure, one fundamental mode uses the first type of OMT structure, directly fed into the common waveguide. The other fundamental mode is first equally divided into two symmetric branches before being fed into the common waveguide. This type of OMT is larger in size, but its operational bandwidth and isolation are significantly improved. The third type of OMT is known as the Turnstile structure. Its two fundamental modes are each divided into a pair of mutually perpendicular symmetric branches, and then fed into the common waveguide. This OMT has the widest operating frequency band and high port-to-port isolation. However, its drawback is that it is the largest in size.

Currently, the Turnstile structure is the most commonly used, however, existing Turnstile structures require certain broadband matching measures, such as Multi-section Chebyshev Matching, which adds redundant modules and increases the size. Removing the Multi-section Chebyshev Matching directly would worsen the standing wave, making it difficult to ensure antenna performance.

Prior art systems and methods are known from D1(SRIKANTH S ET AL: "A compact full waveguide band turnstile junction orthomode transducer"), D2(CN112103656A), D3(ARAMAKI Y ET AL: "Ultra-Thin broadband OMT with turnstile junction"). D1 discloses a turnstile junction OMT with first and second fundamental mode waveguide units, a turnstile junction, and a square waveguide. D2 discloses a square-to-round transition. D3 discloses stepped square-to-round transitions in OMT configurations. However, none of these documents teaches or suggests the use of a broadband gradient square-to-round transition in the present invention.

### SUMMARY OF THE DISCLOSURE

The objective of this invention includes providing an Orthomode Transducer according to claim 1 and a dual-linear polarization feed acording to claim 8 that reduces structural size while ensuring excellent standing wave bandwidth and isolation bandwidth performance.

An embodiment of this invention can be implemented as follows:

Firstly, this invention provides an Orthomode Transducer comprising a first Fundamental Mode Waveguide Unit, a second Fundamental Mode Waveguide Unit, a Common Waveguide, and a Square-to-Round Transition Waveguide. One end of the first Fundamental Mode Waveguide Unit has a first polarization port and connects to the Common Waveguide at the other end. The second Fundamental Mode Waveguide Unit has a second polarization port perpendicular to the first polarization port at one end and connects to the Common Waveguide at the other end. The Square-to-Round Transition Waveguide connects to the Common Waveguide.

The first Fundamental Mode Waveguide Unit includes a first Rectangular Waveguide, a first T-junction, and two first Bent Symmetric Branches. One end of each of the two first Bent Symmetric Branches connects to the first Rectangular Waveguide through the first T-junction, and the other ends, away from the Rectangular Waveguide, connect to the Common Waveguide. The first polarization port is located at the end of the first Rectangular Waveguide farthest from the first T-junction.

Each of the first Bent Symmetric Branches incorporates at least a part with a Width Tapered Structure, and the width of the end of each first Bent Symmetric Branch near the first Rectangular Waveguide matches the width of the end of the first T-junction, and the width of the end near the Common Waveguide matches the width of the Common Waveguide, allowing a smooth transition between each first Bent Symmetric Branch and the Common Waveguide.

In an optional embodiment, the width of the Common Waveguide is the same as the width of the Rectangular Waveguide. The width of the end of the first T-junction is half the width of the Common Waveguide and each first Bent Symmetric Branch near the Common Waveguide end incorporates a Width Tapered Structure, allowing the width at the end near the Common Waveguide to gradually increase.

In an optional embodiment, the first Bent Symmetric Branches include a first straight segment and a first bent segment. The first straight segment connects to the end of the first T-junction. One end of the first bent segment connects to the first straight segment and bends towards the Common Waveguide relative to the first straight segment. The other end of the first bent segment connects to the Common Waveguide, and the first bent segment employs a Width Tapered Structure to gradually increase its width.

In an optional embodiment, a square Waveguide is also set between the Common Waveguide and the Square-to-Round Transition Waveguide. A metal isolation block is also placed within the Common Waveguide, corresponding to the central position of the square Waveguide.

In an embodiment, the second Fundamental Mode Waveguide Unit includes a second Rectangular Waveguide, a second T-junction, and two second Bent Symmetric Branches. The second Rectangular Waveguide is positioned between the two first Bent Symmetric Branches. The two second Bent Symmetric Branches connect to one end of the second Rectangular Waveguide through the second T-junction. The second polarization port is vertically set at the other end of the second Rectangular Waveguide, and the two second Bent Symmetric Branches along with the two first Bent Symmetric Branches connect around the Common Waveguide.

In an embodiment, at least part of each second Bent Symmetric Branches adopts a Width Tapered Structure. The width of the second Bent Symmetric Branches near the end of the second Rectangular Waveguide is the same as the width of the end of the second T-junction. The width of the second Bent Symmetric Branches near the end of the Common Waveguide matches the width of the Common Waveguide, allowing a smooth transition between each of the second Bent Symmetric Branches and the Common Waveguide.

In an optional embodiment, the width of the end of the second T-junction is half the width of the Common Waveguide. Each second Bent Symmetric Branches near the end of the Common Waveguide employs a Width Tapered Structure to gradually increase the width near the end of the Common Waveguide.

In an optional embodiment, the second Bent Symmetric Branches directly include a second straight segment and a second bent segment. The second straight segment is connected to the end of the second T-junction. One end of the second bent segment is connected to the second straight segment and bends towards the Common Waveguide relative to the second straight segment. The other end of the second bent segment is connected to the Common Waveguide, and the second bent segment employs a Width Tapered Structure to gradually increase its width.

In an optional embodiment, the central position of the first T-junction has a first triangular slot, which corresponds to the central line of the first Rectangular Waveguide; the central position of the second T-junction has a second triangular slot, which corresponds to the central line of the second Rectangular Waveguide.

Secondly, the invention provides a dual-line polarized feed source, comprising a flanged corrugated horn and an Orthomode Transducer as described in any of the aforementioned embodiments, where the flanged corrugated horn is connected to the Square-to-Round Transition Waveguide.

The beneficial effects of the embodiments of the invention include, for example:

This embodiment of the invention provides an Orthomode Transducer, connecting one end of two first Bent Symmetric Branches through a first T-junction to a first Rectangular Waveguide, and the other ends to a Common Waveguide. The end of the first Rectangular Waveguide, distant from the first T-junction, is equipped with a first polarization port. Moreover, at least part of each first Bent Symmetric Branch employs a Width Tapered Structure, and the width of the end of the first Bent Symmetric Branch near the Rectangular Waveguide matches the width of the end of the first T-junction, while the width of the end near the Common Waveguide matches the width of the Common Waveguide, facilitating a smooth transition between each first Bent Symmetric Branch and the Common Waveguide. In operation, the fundamental mode of the first Fundamental Mode Waveguide Unit is fed from the first polarization port through a straight waveguide port, the branches are split into two by the first T-junction in terms of width, and then fed into the Common Waveguide through two Bent Symmetric Branches. Here, the adoption of a Width Tapered Structure on the Bent Symmetric Branches avoids size discrepancies with the Common Waveguide, maintains dimensional continuity, and achieves a smooth transition from the Rectangular Waveguide to the Common Waveguide, ensuring the standing wave bandwidth and preventing the deterioration of standing waves. Compared to existing technologies, this embodiment of the invention eliminates matching measures, directly transmitting signals through the first T-junction without the need for broadband matching measures such as multi-section Chebyshev matching, significantly reducing the overall structure size. Moreover, due to the use of a Width Tapered Structure on the first Bent Symmetric Branches, a smooth transition is achieved between the first Bent Symmetric Branches and the Common Waveguide, and consequently from the Rectangular Waveguide to the Common Waveguide, ensuring the standing wave bandwidth, preventing the deterioration of standing waves, and ensuring excellent standing wave bandwidth and isolation bandwidth performance.

### BRIEF DESCRIPTION OF THE DRAWINGS

To more clearly illustrate the technical solutions of this embodiment of the invention, the drawings used in the embodiment are briefly introduced below. It should be understood that the following drawings only show some embodiments of the invention, and thus should not be seen as limiting the scope. For those skilled in the art, other related drawings can be obtained based on these drawings without creative effort.
Figure 1 is a schematic diagram of an Orthomode Transducer in existing technology;
Figure 2 is a schematic diagram of the Orthomode Transducer provided by the first embodiment of this invention;
Figure 3 is a schematic view of the Orthomode Transducer provided by the first embodiment of the present invention from a first perspective;
Figure 4 is a schematic view of the Orthomode Transducer provided by the first embodiment of the present invention from a second perspective;
Figure 5 is a schematic view of the Orthomode Transducer provided by the first embodiment of the present invention from a third perspective;
Figure 6 is a cross-sectional view at A-A in Figure 5;
Figure 7 is a schematic view of the dual-line polarized feed source provided by the second embodiment of my invention.

Legend: 100-Orthomode Transducer; 110-First Fundamental Mode Waveguide Unit; 111-First Rectangular Waveguide; 113-First T-junction; 115-First Bent Symmetric Branches; 117-First Straight Section; 119-First Bent Section; 120-Second Fundamental Mode Waveguide Unit; 121-Second Rectangular Waveguide; 123-Second T-junction; 125-Second Bent Symmetric Branches; 127-Second Straight Section; 129-Second Bent Section; 130-Common Waveguide; 140-Square-to-Round Transition Waveguide; 150-First Polarization Port; 160-Second Polarization Port; 170-Square Waveguide; 180-Metal Isolation Block; 200-Dual-Line Polarized Feed Source; 210-Flanged Corrugated Horn.

### DETAILED IMPLEMENTATION OF THE DISCLOSURE

To clarify the objectives, technical solutions, and advantages of the embodiments of this invention, the following description will provide a clear and complete description of the technical solutions in the embodiments of the invention, using the accompanying drawings. It is evident that the described embodiments are part of the invention, not all of them. Typically, the components of the embodiments of the invention described and shown here can be arranged and designed in various different configurations.

Therefore, the detailed description of the embodiments of the invention provided in the accompanying drawings is not intended to limit the scope of the invention but merely represents selected embodiments of the invention. Based on these embodiments, all other embodiments obtained by those skilled in the art without creative effort fall within the scope of protection of this invention.

It should be noted that similar labels and letters in the following figures indicate similar items, therefore, once an item is defined in one figure, it does not need to be further defined or explained in subsequent figures.

In the description of this invention, it should be noted that terms such as "upper", "lower", "inner", "outer" indicate orientations or positional relationships based on the orientations or positions shown in the drawings, or the usual orientations or positions when the product of the invention is used. These are merely for the convenience of describing the invention and simplifying the description, and do not indicate or imply that the devices or components must have specific orientations, be constructed and operated in specific orientations, and thus should not be construed as limitations on the invention.

Furthermore, terms such as "first", "second" are used merely to distinguish descriptions and should not be understood as indicating or implying relative importance.

As disclosed in the background technology, the turnstile structured Orthomode Transducer (OMT) exhibits excellent performance with wide bandwidth and high isolation, hence it is commonly used in conventional technologies. The turnstile structured OMT feeds two orthogonal fundamental modes into a pair of perpendicular Bent Symmetric Branches, as this structure presents symmetry for both modes, it maximizes the suppression of higher-order modes, thereby achieving wider operational bandwidth and higher isolation. The two Bent Symmetric Branches are then fed into a Common Waveguide, where additional isolation measures are implemented to ensure that the two orthogonal modes can operate independently without interference. This is followed by a transition through a Rectangular Waveguide and a Square-to-Round Transition Waveguide, connecting to the backend corrugated horn to form a complete dual-polarized antenna.

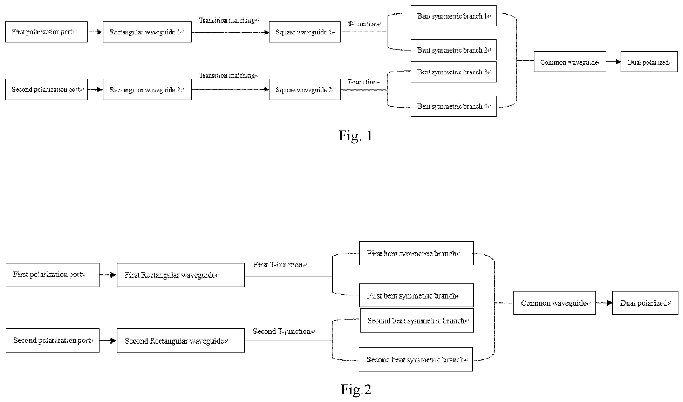

Conventional OMT designs can be summarized in Figure 1. A single polarization mode is fed into a Rectangular Waveguide, transformed into a Rectangular Waveguide through certain matching measures, typically, broadband matching involves multiple-section Chebyshev matching. The Rectangular Waveguide is then split into two via a T-junction, forming two Bent Symmetric Branches. And another polarization mode's Bent Symmetric Branches, structurally perpendicular to each other, are connected at the Common Waveguide, from which two orthogonal polarization modes are output without interference, feeding the front-end antenna to form a dual-linear polarized antenna. However, due to the multi-section Chebyshev matching being a multi-stage protruding structure, it occupies a large space, leading to an excessive number of redundant units in the entire OMT, which is not conducive to miniaturization.

However, if the matching measures are removed to reduce the size of the OMT, it will lead to a significant size difference between the Bent Symmetric Branches and the Common Waveguide, enhancing discontinuities and thus worsening the standing wave.

To address the aforementioned issues, this invention provides a novel Orthomode Transducer and dual-linear polarization feed, capable of reducing structural size while ensuring excellent standing wave bandwidth and isolation bandwidth performance. It should be noted that, where not conflicting, features in the embodiments of this invention can be combined.

### First Embodiment

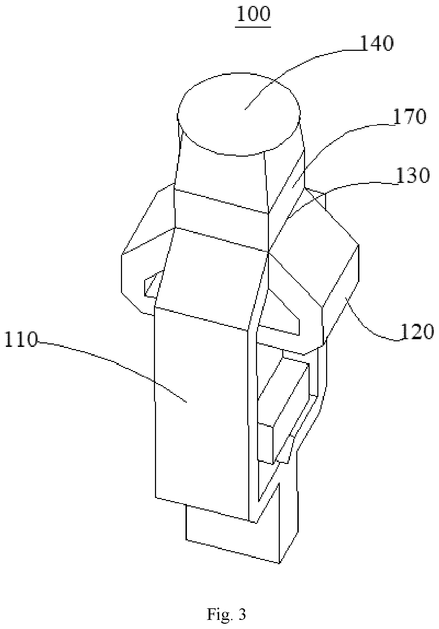

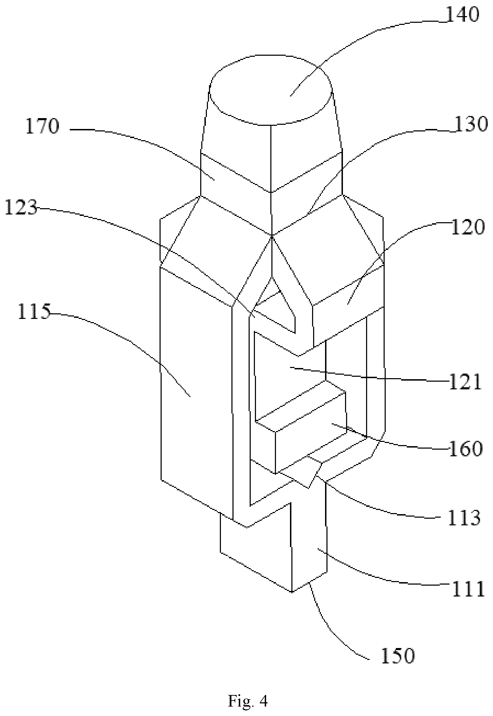

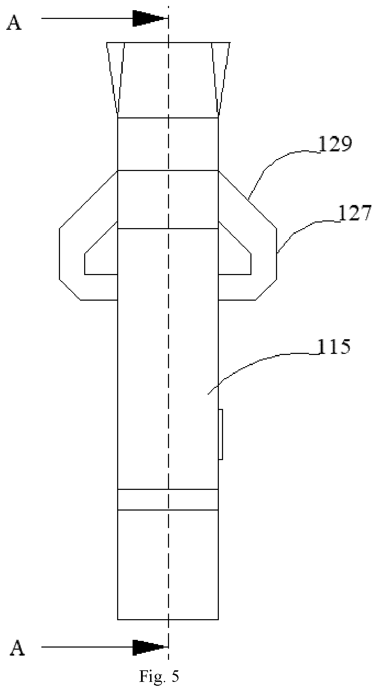

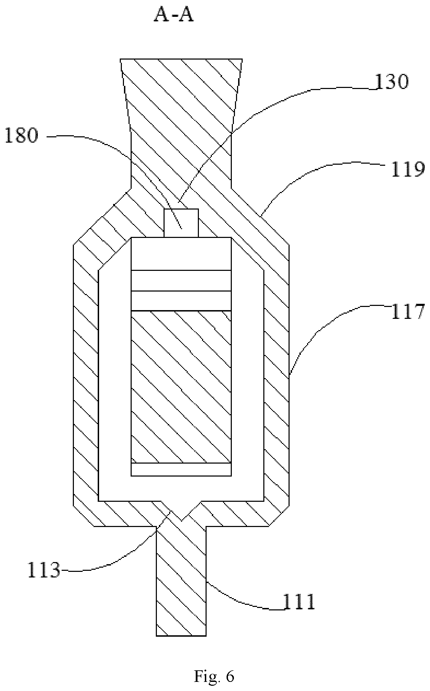

Referring to Figures 2 to 6, this embodiment provides an Orthomode Transducer 100, which does not require Broadband Matching Measures such as Multi-section Chebyshev Matching, thereby significantly reducing the overall size of the structure. It also achieves a smooth transition from the Rectangular Waveguide to the Common Waveguide 130, ensuring the Standing Wave Bandwidth, preventing the deterioration of standing waves, and ensuring excellent Standing Wave Bandwidth and Isolation Bandwidth Performance.

This embodiment provides an Orthomode Transducer 100, comprising a First Fundamental Mode Waveguide Unit 110, a Second Fundamental Mode Waveguide Unit 120, a Common Waveguide 130, and a Square to Circular Transition Waveguide 140, one end of the First Fundamental Mode Waveguide Unit 110 has a First Polarization Port 150, and the other end is connected to the Common Waveguide 130, one end of the Second Fundamental Mode Waveguide Unit 120 is equipped with a Second Polarization Port 160, which is perpendicular to the First Polarization Port 150, and the other end is connected to the Common Waveguide 130, and the Square to Circular Transition Waveguide 140 is connected to the Common Waveguide 130.

The First Fundamental Mode Waveguide Unit 110 includes a First Rectangular Waveguide 111, a First T-junction 113, and two First Bent Symmetric Branches 115, one end of each of the two First Bent Symmetric Branches 115 is connected to the First Rectangular Waveguide 111 through the First T-junction 113, and the ends of the two First Bent Symmetric Branches 115, which are away from the Rectangular Waveguide, are both connected to the Common Waveguide 130, the First Polarization Port 150 is located at the end of the First Rectangular Waveguide 111, which is away from the First T-junction 113;wherein, at least a part of each First Bent Symmetric Branch 115 employs a width-gradient structure, and the width of the end of the First Bent Symmetric Branch 115 near the Rectangular Waveguide is the same as the width of the end of the First T-junction 113, and the width of the end of the First Bent Symmetric Branch 115 near the Common Waveguide 130 is the same as the width of the Common Waveguide 130, to facilitate a smooth transition between each First Bent Symmetric Branch 115 and the Common Waveguide 130.

In this embodiment, two First Bent Symmetric Branches 115 are symmetrically distributed and connected to the opposite sides of the Common Waveguide 130, and the First T-junction 113 also has a symmetrical structure, used to split the First Rectangular Waveguide 111 into two in the width direction. It should be noted that here, the First T-junction 113 is directly connected to the First Rectangular Waveguide 111, and there is no need for matching measures at this point.

In this embodiment, the width of the Common Waveguide 130 is the same as that of the Rectangular Waveguide, the end width of the First T-junction 113 is half the width of the Common Waveguide 130, and each First Bent Symmetric Branch 115 near one end of the Common Waveguide 130 adopts a width transition structure, so that the width of the First Bent Symmetric Branch 115 near the Common Waveguide 130 gradually increases. Specifically, the width of both the Common Waveguide 130 and the Rectangular Waveguide is W. After passing through the First T-junction 113, the Rectangular Waveguide is split into two, each with a width of W/2. The First Bent Symmetric Branch 115, from the feed direction at the width transition structure, gradually increases from W/2 to W, maintaining the same width as the Common Waveguide 130. Furthermore, the end of the First Bent Symmetric Branch 115 that feeds into the Common Waveguide 130 employs a width transition structure, enabling a smooth transition with the Common Waveguide 130 and thus preventing the deterioration of standing waves.

The First Bent Symmetric Branch 115 directly includes the First Straight Segment 117 and the First Bend Segment 119. The First Straight Segment 117 connects to the end of the First T-junction 113, one end of the First Bend Segment 119 connects to the First Straight Segment 117 and bends towards the Common Waveguide 130, the other end of the First Bend Segment 119 connects to the Common Waveguide 130, and the First Bend Segment 119 employs a width transition structure to gradually increase its width. Specifically, the First Bend Segment 119 utilizes a beveled structure, where both the upper and lower sides of the First Bend Segment 119 are sloped, with different slopes on each side, allowing the width of the First Bend Segment 119 to gradually increase from the First Straight Segment 117 towards the Common Waveguide 130, facilitating a smooth transition. Of course, in other preferred embodiments of this invention, the width transition structure can also be implemented on the First Straight Segment 117, and the width after the transition remains consistent, similarly achieving a smooth transition with the Common Waveguide 130.

It should be noted that the width transition structure mentioned in this embodiment refers to the structure's width gradually increasing along the signal feed direction, with a smooth surface, achieving a smooth transition. Additionally, the widths mentioned in this embodiment refer to those perpendicular to the signal feed direction and are the shorter sides of the relevant structures.

In this embodiment, the Second Fundamental Mode Waveguide Unit 120 includes a Second Rectangular Waveguide 121, a Second T-junction 123, and two Second Bend Symmetric Branches 125. The Second Rectangular Waveguide 121 is positioned between the two First Bent Symmetric Branches 115. The two Second Bend Symmetric Branches 125 are connected to one end of the Second Rectangular Waveguide 121 through the Second T-junction 123, and the Second Polarization Port 160 is vertically positioned at the other end of the Second Rectangular Waveguide 121. The two Second Bend Symmetric Branches 125 and the two First Bent Symmetric Branches 115 are connected around the Common Waveguide 130. Specifically, the basic structure of the Second Fundamental Mode Waveguide Unit 120 is similar to that of the First Fundamental Mode Waveguide Unit 110. The difference is that the Second Rectangular Waveguide 121 is located between the two First Bent Symmetric Branches 115, and the length of the Second Bend Symmetric Branches 125 in the direction of signal feed is shorter than that of the First Bent Symmetric Branches 115 in the same direction.

In this embodiment, the Second Polarization Port 160 is vertically positioned at the end of the Second Rectangular Waveguide 121, away from the Second T-junction 123, extending horizontally to facilitate the feeding of the second fundamental mode.

In this embodiment, at least part of each Second Bend Symmetric Branch 125 adopts a width gradient structure. The width of the Second Bend Symmetric Branch 125 near the end of the Rectangular Waveguide is the same as the end width of the Second T-junction 123, and the width near the Common Waveguide 130 is the same as the width of the Common Waveguide 130, allowing a smooth transition between each Second Bend Symmetric Branch 125 and the Common Waveguide 130.

In this embodiment, the end width of the Second T-junction 123 is half the width of the Common Waveguide 130. Each Second Bend Symmetric Branch 125 near the Common Waveguide 130 adopts a width gradient structure, gradually increasing the width at the end near the Common Waveguide 130.

The Second Bend Symmetric Branch 125 includes a second straight segment 127 and a second bend segment 129. The second straight segment 127 is connected to the end of the second T-junction 123. One end of the second bend segment 129 is connected to the second straight segment 127, and it bends towards the common waveguide 130 relative to the second straight segment 127. The other end of the second bend segment 129 is connected to the common waveguide 130, and the second bend segment 129 adopts a width gradient structure to gradually increase its width.

Notably, in this embodiment, the first bend segment 119 and the second bend segment 129 are arranged in a cross-shaped distribution around the common waveguide 130, thereby achieving orthogonal feeding.

In this embodiment, a first triangular slot is located at the centerline position of the first T-junction 113, corresponding to the centerline of the first rectangular waveguide 111; a second triangular slot is located at the centerline position of the second T-junction 123, corresponding to the centerline of the second rectangular waveguide 121. By adopting the triangular slot structure, replacing the existing arc slot structure, it facilitates processing while further reducing the size.

In this embodiment, a square waveguide 170 is also set between the common waveguide 130 and the square to circular transition waveguide 140, and a metal isolation block 180 is also set within the common waveguide 130, corresponding to the center position of the square waveguide 170. Specifically, the metal isolation block 180 serves as an isolation measure, allowing the two orthogonal modes to operate independently without interference. This is followed by the square waveguide 170 and square to circular transition, connecting to the rear-end corrugated horn to form a complete dual-polarization antenna.

In this embodiment, to reduce the size of the Orthomode Transducer 100 and optimize the design steps, all redundant blocks in the conventional Orthomode Transducer 100 design diagram are removed, proposing a miniaturized Orthomode Transducer 100 design diagram as shown in Figure 2. A single polarization mode is fed into the First Polarization Port 150 on the First Rectangular Waveguide 111, and directly split by the First T-junction 113 into two, forming the two First Bent Symmetric Branches 115, which connect with the Second Bend Symmetric Branch 125 of another polarization mode at the Common Waveguide 130. This scheme, by eliminating the conversion from Rectangular Waveguide to Square Waveguide 170 and avoiding additional matching measures, results in a significant size difference between the Symmetrical Bend Branches and the Common Waveguide 130 after the T-junction split, enhancing discontinuity and thus worsening the standing wave. Therefore, this embodiment designs Symmetrical Bend Branches with a bent waveguide type, where both the first bend section 119 and the second bend section 129 are designed with a width gradient structure, allowing a smooth transition from the Rectangular Waveguide to the Common Waveguide 130, ensuring Standing Wave Bandwidth. By adopting this scheme, the size of the Orthomode Transducer 100 can be significantly reduced, with minimal impact on the Standing Wave Bandwidth and Isolation.

The working principle of the Orthomode Transducer 100 provided in this embodiment is described as follows, The fundamental mode of the First Fundamental Mode Waveguide Unit 110 is fed by the First Polarization Port 150 of the First Rectangular Waveguide 111 then it is directly split into two in the width direction by the First T-junction 113, to facilitate processing and reduce size the middle, the First T-junction 113 is designed as a triangle separated by an arc. After the First T-junction 113 two symmetrical First Bent Symmetric Branches 115 are designed allowing the signal to be fed into the Common Waveguide 130 by the First Bent Symmetric Branch 115. The designed width gradient structure serves as a transition between the First Bent Symmetric Branch 115 and the Common Waveguide 130 by adjusting the bending radius at the end to reduce reflection. Similarly, to facilitate feeding the fundamental mode of the Second Fundamental Mode Waveguide Unit 120 is fed by the Second Polarization Port 160 with a 90° right-angle bend split into two by the triangular Second T-junction 123 , fed into the Common Waveguide 130 by the Second Symmetrical Bend Branch 125. Among them, the dimensions of the First Polarization Port 150 and the Second Polarization Port 160, differ only in length and the form of the input segment waveguide, other branches such as T-junctions and symmetrical bend branches have exactly the same cross-sectional dimensions. At the Common Square Waveguide 170, a rectangular block is used as an isolation measure at the bottom of the Square Waveguide 170 which facilitates processing. Adjusting the length, width, and height of the rectangular block can adjust the standing wave at the port ensuring that the two polarization signals at the Common Waveguide 130 do not interfere with each other. To facilitate the connection between the Common Waveguide 130 and the antenna, the outlet of the Common Waveguide 130 uses the Square Waveguide 170 and the Square to Circular Transition Waveguide 140 ensuring good matching between the Orthomode Transducer 100 and the antenna.

In summary, this embodiment provides an Orthomode Transducer 100, which connects one end of two First Bent Symmetric Branches 115 to the First Rectangular Waveguide 111 via the First T-junction 113, and the other ends of the two First Bent Symmetric Branches 115 are connected to the Common Waveguide 130. The end of the First Rectangular Waveguide 111, which is far from the First T-junction 113, is equipped with the First Polarization Port 150. Additionally, at least part of each First Bent Symmetric Branch 115 adopts a width gradient structure, and the width of the end of the First Bent Symmetric Branch 115 near the Rectangular Waveguide is the same as the width of the end of the First T-junction 113. The width of the end of the First Bent Symmetric Branch 115 near the Common Waveguide 130 is the same as the width of the Common Waveguide 130, allowing a smooth transition between each First Bent Symmetric Branch 115 and the Common Waveguide 130. In operation, the fundamental mode of the First Fundamental Mode Waveguide Unit 110 is fed from the direct waveguide port at the First Polarization Port 150, the branches are split into two in the width direction by the First T-junction 113, and then fed into the Common Waveguide 130 through two symmetrical bend branches. Here, the width gradient structure is used on the bend branches to avoid size differences between the bend branches and the Common Waveguide 130, maintaining size continuity, achieving a smooth transition from the Rectangular Waveguide to the Common Waveguide 130, ensuring Standing Wave Bandwidth, and preventing the deterioration of standing waves. This embodiment of the invention eliminates the need for matching measures, directly transmitting signals through the First T-junction 113 without the need for broadband matching measures, such as Multi-section Chebyshev Matching, thus significantly reducing the overall size of the structure. Moreover, due to the adoption of the width gradient structure on the First Bent Symmetric Branch 115, a smooth transition between the First Bent Symmetric Branch 115 and the Common Waveguide 130 is achieved, further ensuring a smooth transition from the Rectangular Waveguide to the Common Waveguide 130, ensuring Standing Wave Bandwidth, preventing the deterioration of standing waves, and ensuring excellent Standing Wave Bandwidth and Isolation Bandwidth Performance.

### Second Embodiment

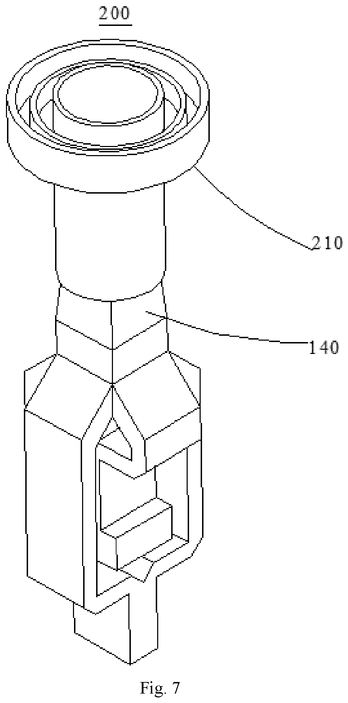

Referring to Figure 7, this embodiment provides a Dual-Line Polarization Feed 200, including an Orthomode Transducer 100. The basic structure, principles, and technical effects of this Orthomode Transducer 100 are the same as those in the first embodiment. For brevity, parts not mentioned in this embodiment can refer to the corresponding content in the first embodiment.

In this embodiment, the dual-line polarization feed source 200 includes a flanged corrugated horn 210 and an Orthomode Transducer 100, which comprises a First Fundamental Mode Waveguide Unit 110, a Second Fundamental Mode Waveguide Unit 120, a Common Waveguide 130, and a Square to Circular Transition Waveguide 140. One end of the First Fundamental Mode Waveguide Unit 110 has a First Polarization Port 150 and connects to the Common Waveguide 130 at the other end. The Second Fundamental Mode Waveguide Unit 120 has a Second Polarization Port 160, perpendicular to the First Polarization Port 150, at one end and connects to the Common Waveguide 130 at the other end. The Square to Circular Transition Waveguide 140 connects to the Common Waveguide 130. The flanged corrugated horn 210 connects to the Square to Circular Transition Waveguide 140.

In this embodiment, a miniaturized Orthomode Transducer 100 from the first embodiment is used, connected to a traditional flanged corrugated horn 210 to form the dual-line polarization feed source 200. The flanged corrugated horn 210 is fed by a circular waveguide port, with two rings of metal choke grooves added at the edge of the circular waveguide port. The circular waveguide serves as the main radiating body, with the choke grooves assisting in radiation, reducing the back lobe and stabilizing the phase center to achieve a symmetrical radiation pattern. Generally, the more choke grooves, the better the effect, but this increases the manufacturing difficulty, and with more choke grooves, the performance improvement is not significant; two choke grooves can achieve the desired effect. The flanged corrugated horn 210 and the Orthomode Transducer 100 are connected using a square waveguide 170 and a Square to Circular Transition Waveguide 140, ensuring Standing Wave Bandwidth and gain bandwidth. The proposed miniaturized dual-line polarization feed source 200 can achieve the broadband high isolation performance of a turnstile-type OMT while being compact, and the proposed OMT design method also reduces the manufacturing difficulty by eliminating unnecessary structures from the original design.

## Claims

1. An orthomode transducer (100), comprising:
a first fundamental mode waveguide unit (110),
a second fundamental mode waveguide unit (120),
a common waveguide (130), and
a Square-to-Round Transition Waveguide (140);
wherein one end of the first fundamental mode waveguide unit (110) has a first polarization port (150), and the other end is connected to the common waveguide (130), one end of the second fundamental mode waveguide unit (120) is equipped with a second polarization port (160) perpendicular to the first polarization port (150), and the other end is connected to the common waveguide (130), and the Square-to-Round Transition Waveguide (140) is connected to the common waveguide (130);
wherein the first fundamental mode waveguide unit (110) includes a first rectangular waveguide (111), a first T-junction (113), and two first bent symmetric branches (115), in which one end of each of the two first bent symmetric branches (115) is connected to the first rectangular waveguide (111) through the first T-junction (113), and the other ends of the two first bent symmetric branches (115), which are away from the first rectangular waveguide (111), are connected to the common waveguide (130); and the first polarization port (150) is located at the end of the first rectangular waveguide (111) far from the first T-junction (113);
wherein at least a part of each of the first bent symmetric branches (115) adopts a width-graded structure, gradually increasing in width along the direction of signal feed, and the width of the end of the first bent symmetric branch (115) near the first rectangular waveguide (111) is the same as the end width of the first T-junction (113), and the width of the end of the first bent symmetric branch (115) near the common waveguide (130) is the same as the width of the common waveguide (130), to allow a smooth transition between each of the first bent symmetric branches (115) and the common waveguide (130);
wherein the second fundamental mode waveguide unit (120) includes a second rectangular waveguide (121), a second T-junction (123), and two second bent symmetric branches (125);
wherein the second rectangular waveguide (121) is positioned between the two first bent symmetric branches (115), and the two second bent symmetric branches (125) are connected to one end of the second rectangular waveguide (121) through the second T-junction (123), the second polarization port (160) is vertically arranged at the other end of the second rectangular waveguide (121), and the two second bent symmetric branches (125) along with the two first bent symmetric branches (115) are connected around the common waveguide (130);
wherein each of the second bent symmetric branches (125) at least partially adopts a width-graded structure, and the width of the second bent symmetric branch (125) near the end of the second rectangular waveguide (121) is the same as the width of the end of the second T-junction (123), and the width of the second bent symmetric branch (125) near the end of the common waveguide (130) is the same as the width of the common waveguide (130), allowing a smooth transition between each of the second bent symmetric branches (125) and the common waveguide (130).

2. The orthomode transducer according to claim 1, wherein
the width of the common waveguide (130) is the same as the width of the first rectangular waveguide (111), the width of the end of the first T-junction (113) is half of the width of the common waveguide (130), and each of the first bent symmetric branches (115) near the common waveguide (130) end adopts a width gradient structure, so that the width of the end of the first bent symmetric branches near the common waveguide (130) gradually increases.

3. The orthomode transducer according to claim 2, wherein the first bent symmetric branch (115) includes a first straight segment (117) and a first bent segment (119), wherein the first straight segment (117) is connected to the end of the first T-junction (113), one end of the first bent segment (119) is connected to the first straight segment (117) and bends towards the common waveguide (130) relative to the first straight segment (117), the other end of the first bent segment (119) is connected to the common waveguide (130), and the first bent segment (119) adopts the width graded structure, so that the width of the first bent segment (119) gradually increases.

4. The orthomode transducer according to claim 1, wherein a square waveguide (170) is also arranged between the common waveguide (130) and the square-to-round transition waveguide (140), and a metal isolation block (180) is also arranged inside the common waveguide (130), which corresponds to the central position of the square waveguide.

5. The orthomode transducer according to claim 1, wherein the width of the end of the second T-junction (123) is half the width of the common waveguide (130), and each of the second bent symmetric branches (125) near the end of the common waveguide (130) adopts a width-graded structure, so that the width of the second bent symmetric branches (125) near the common waveguide (130) gradually increases.

6. The orthomode transducer according to claim 5, wherein the second bent symmetric branch (125) includes a second straight segment (127) and a second bent segment (129), wherein the second straight segment (127) is connected to the end of the second T-junction (123), one end of the second bent segment (129) is connected to the second straight segment (127) and bends towards the common waveguide (130) relative to the second straight segment (127), the other end of the second bent segment (129) is connected to the common waveguide (130), and the second bent segment (129) adopts the width-graded structure, so that the width of the second bent segment (129) gradually increases..

7. The orthomode transducer according to claim 1, wherein the first T-junction (113) has a first triangular slot at its centerline position, which corresponds to the centerline of the first rectangular waveguide (111); the second T-junction (123) has a second triangular slot at its centerline position, which corresponds to the centerline of the second rectangular waveguide (121).

8. A dual-line polarized feed, **characterized in that** it comprises a flanged corrugated horn (210) and an orthomode transducer (100) as described in any one of claims 1-7, wherein the flanged corrugated horn (210) is connected to the square-to-round transition waveguide (140).

## Patentansprüche

1. Orthomode-Transducer (100), umfassend:
eine erste Grundmodus-Wellenleitereinheit (110),
eine zweite Grundmodus-Wellenleitereinheit (120),
einen gemeinsamen Wellenleiter (130), und
einen Quadrat-zu-Rund-Übergangswellenleiter (140);
wobei ein Ende der ersten Grundmodus-Wellenleitereinheit (110) einen ersten Polarisationsport (150) aufweist und das andere Ende mit dem gemeinsamen Wellenleiter (130) verbunden ist, ein Ende der zweiten Grundmodus-Wellenleitereinheit (120) mit einem zweiten Polarisationsport (160) ausgestattet ist, der senkrecht zum ersten Polarisationsport (150) angeordnet ist, und das andere Ende mit dem gemeinsamen Wellenleiter (130) verbunden ist, und der Quadrat-zu-Rund-Übergangswellenleiter (140) mit dem gemeinsamen Wellenleiter (130) verbunden ist;
wobei die erste Grundmodus-Wellenleitereinheit (110) einen ersten Rechteckwellenleiter (111), eine erste T-Verzweigung (113) und zwei erste symmetrische gekrümmte Zweige (115) umfasst, wobei ein Ende jedes der beiden ersten symmetrischen gekrümmten Zweige (115) über die erste T-Verzweigung (113) mit dem ersten Rechteckwellenleiter (111) verbunden ist und die anderen, vom ersten Rechteckwellenleiter (111) abgewandten Enden der beiden ersten symmetrischen gekrümmten Zweige (115) mit dem gemeinsamen Wellenleiter (130) verbunden sind; und wobei sich der erste Polarisationsport (150) an dem Ende des ersten Rechteckwellenleiters (111) befindet, das von der ersten T-Verzweigung (113) entfernt ist;
wobei zumindest ein Teil jedes der ersten symmetrischen gekrümmten Zweige (115) eine Breiten-Gradientenstruktur aufweist, die sich entlang der Signal-Speiserichtung allmählich in der Breite vergrößert, und die Breite des Endes des ersten symmetrischen gekrümmten Zweiges (115) nahe dem ersten Rechteckwellenleiter (111) der Endbreite der ersten T-Verzweigung (113) entspricht, und die Breite des Endes des ersten symmetrischen gekrümmten Zweiges (115) nahe dem gemeinsamen Wellenleiter (130) der Breite des gemeinsamen Wellenleiters (130) entspricht, um einen sanften Übergang zwischen jedem der ersten symmetrischen gekrümmten Zweige (115) und dem gemeinsamen Wellenleiter (130) zu ermöglichen;
wobei die zweite Grundmodus-Wellenleitereinheit (120) einen zweiten Rechteckwellenleiter (121), eine zweite T-Verzweigung (123) und zwei zweite symmetrische gekrümmte Zweige (125) umfasst;
wobei der zweite Rechteckwellenleiter (121) zwischen den beiden ersten symmetrischen gekrümmten Zweigen (115) angeordnet ist und die beiden zweiten symmetrischen gekrümmten Zweige (125) über die zweite T-Verzweigung (123) mit einem Ende des zweiten Rechteckwellenleiters (121) verbunden sind, der zweite Polarisationsport (160) am anderen Ende des zweiten Rechteckwellenleiters (121) vertikal angeordnet ist, und die beiden zweiten symmetrischen gekrümmten Zweige (125) zusammen mit den beiden ersten symmetrischen gekrümmten Zweigen (115) um den gemeinsamen Wellenleiter (130) herum verbunden sind;
wobei jeder der zweiten symmetrischen gekrümmten Zweige (125) zumindest teilweise eine Breiten-Gradientenstruktur aufweist, und die Breite des zweiten symmetrischen gekrümmten Zweiges (125) nahe dem Ende des zweiten Rechteckwellenleiters (121) der Breite des Endes der zweiten T-Verzweigung (123) entspricht, und die Breite des zweiten symmetrischen gekrümmten Zweiges (125) nahe dem Ende des gemeinsamen Wellenleiters (130) der Breite des gemeinsamen Wellenleiters (130) entspricht, wodurch ein sanfter Übergang zwischen jedem der zweiten symmetrischen gekrümmten Zweige (125) und dem gemeinsamen Wellenleiter (130) ermöglicht wird.

2. Orthomode-Transducer nach Anspruch 1, wobei
die Breite des gemeinsamen Wellenleiters (130) der Breite des ersten Rechteckwellenleiters (111) entspricht, die Breite des Endes der ersten T-Verzweigung (113) die Hälfte der Breite des gemeinsamen Wellenleiters (130) beträgt und jeder der ersten symmetrischen gekrümmten Zweige (115) nahe dem Ende zum gemeinsamen Wellenleiter (130) hin eine Breiten-Gradientenstruktur aufweist, sodass die Breite der Enden der ersten symmetrischen gekrümmten Zweige nahe dem gemeinsamen Wellenleiter (130) allmählich zunimmt.

3. Orthomode-Transducer nach Anspruch 2, wobei der erste symmetrische gekrümmte Zweig (115) einen ersten geraden Abschnitt (117) und einen ersten Bogenabschnitt (119) umfasst, wobei der erste gerade Abschnitt (117) mit dem Ende der ersten T-Verzweigung (113) verbunden ist, ein Ende des ersten Bogenabschnitts (119) mit dem ersten geraden Abschnitt (117) verbunden ist und sich relativ zum ersten geraden Abschnitt (117) in Richtung des gemeinsamen Wellenleiters (130) krümmt, das andere Ende des ersten Bogenabschnitts (119) mit dem gemeinsamen Wellenleiter (130) verbunden ist, und der erste Bogenabschnitt (119) die Breiten-Gradientenstruktur aufweist, sodass sich die Breite des ersten Bogenabschnitts (119) allmählich vergrößert.

4. Orthomode-Transducer nach Anspruch 1, wobei zwischen dem gemeinsamen Wellenleiter (130) und dem Quadrat-zu-Rund-Übergangswellenleiter (140) zusätzlich ein Quadratwellenleiter (170) angeordnet ist und innerhalb des gemeinsamen Wellenleiters (130) zusätzlich ein metallischer Isolationsblock (180) angeordnet ist, der der zentralen Position des Quadratwellenleiters entspricht.

5. Orthomode-Transducer nach Anspruch 1, wobei die Breite des Endes der zweiten T-Verzweigung (123) die Hälfte der Breite des gemeinsamen Wellenleiters (130) beträgt und jeder der zweiten symmetrischen gekrümmten Zweige (125) nahe dem Ende zum gemeinsamen Wellenleiter (130) hin eine Breiten-Gradientenstruktur aufweist, sodass die Breite der zweiten symmetrischen gekrümmten Zweige (125) nahe dem gemeinsamen Wellenleiter (130) allmählich zunimmt.

6. Orthomode-Transducer nach Anspruch 5, wobei der zweite symmetrische gekrümmte Zweig (125) einen zweiten geraden Abschnitt (127) und einen zweiten Bogenabschnitt (129) umfasst, wobei der zweite gerade Abschnitt (127) mit dem Ende der zweiten T-Verzweigung (123) verbunden ist, ein Ende des zweiten Bogenabschnitts (129) mit dem zweiten geraden Abschnitt (127) verbunden ist und sich relativ zum zweiten geraden Abschnitt (127) in Richtung des gemeinsamen Wellenleiters (130) krümmt, das andere Ende des zweiten Bogenabschnitts (129) mit dem gemeinsamen Wellenleiter (130) verbunden ist, und der zweite Bogenabschnitt (129) die Breiten-Gradientenstruktur aufweist, sodass sich die Breite des zweiten Bogenabschnitts (129) allmählich vergrößert.

7. Orthomode-Transducer nach Anspruch 5, wobei die erste T-Verzweigung (113) an ihrer Mittellinienposition einen ersten dreieckigen Schlitz aufweist, der der Mittellinie des ersten Rechteckwellenleiters (111) entspricht; und die zweite T-Verzweigung (123) an ihrer Mittellinienposition einen zweiten dreieckigen Schlitz aufweist, der der Mittellinie des zweiten Rechteckwellenleiters (121) entspricht.

8. Speisesystem mit dualer linearer Polarisation, **dadurch gekennzeichnet, dass** es ein Korrugationshorn mit Flansch (210) und einen Orthomode-Transducer (100) nach einem der Ansprüche 1-7 umfasst, wobei das Korrugationshorn mit Flansch (210) mit dem Quadrat-zu-Rund-Übergangswellenleiter (140) verbunden ist.

## Revendications

1. Un transducteur orthomode (100), comprenant :
une première unité de guide d'onde en mode fondamental (110),
une seconde unité de guide d'onde en mode fondamental (120),
un guide d'onde commun (130), et
un guide d'onde de transition carré-à-rond (140) ;
dans lequel une extrémité de la première unité de guide d'onde en mode fondamental (110) comporte un premier port de polarisation (150) et l'autre extrémité est connectée au guide d'onde commun (130), une extrémité de la seconde unité de guide d'onde en mode fondamental (120) est équipée d'un second port de polarisation (160) perpendiculaire au premier port de polarisation (150) et l'autre extrémité est connectée au guide d'onde commun (130), et le guide d'onde de transition carré-à-rond (140) est connecté au guide d'onde commun (130) ;
dans lequel la première unité de guide d'onde en mode fondamental (110) comprend un premier guide d'onde rectangulaire (111),
un premier raccord en T (113) et deux premières branches symétriques coudées (115), dans lequel une extrémité de chacune des deux premières branches symétriques coudées (115) est connectée au premier guide d'onde rectangulaire (111) au moyen du premier raccord en T (113), et les autres extrémités des deux premières branches symétriques coudées (115), éloignées du premier guide d'onde rectangulaire (111), sont connectées au guide d'onde commun (130) ; et le premier port de polarisation (150) est situé à l'extrémité du premier guide d'onde rectangulaire (111) éloignée du premier raccord en T (113) ;
dans lequel au moins une partie de chacune des premières branches symétriques coudées (115) adopte une structure à largeur graduée, augmentant progressivement en largeur suivant la direction d'alimentation du signal, et la largeur de l'extrémité de la première branche symétrique coudée (115) proche du premier guide d'onde rectangulaire (111) est identique à la largeur d'extrémité du premier raccord en T (113), et la largeur de l'extrémité de la première branche symétrique coudée (115) proche du guide d'onde commun (130) est identique à la largeur du guide d'onde commun (130), de sorte à permettre une transition douce entre chacune des premières branches symétriques coudées (115) et le guide d'onde commun (130) ;
dans lequel la seconde unité de guide d'onde en mode fondamental (120) comprend un second guide d'onde rectangulaire (121), un second raccord en T (123) et deux secondes branches symétriques coudées (125) ;
dans lequel le second guide d'onde rectangulaire (121) est disposé entre les deux premières branches symétriques coudées (115), et les deux secondes branches symétriques coudées (125) sont connectées à une extrémité du second guide d'onde rectangulaire (121) au moyen du second raccord en T (123), le second port de polarisation (160) est disposé verticalement à l'autre extrémité du second guide d'onde rectangulaire (121), et les deux secondes branches symétriques coudées (125) ainsi que les deux premières branches symétriques coudées (115) sont connectées autour du guide d'onde commun (130) ;
dans lequel chacune des secondes branches symétriques coudées (125) adopte au moins partiellement une structure à largeur graduée, et la largeur de la seconde branche symétrique coudée (125) proche de l'extrémité du second guide d'onde rectangulaire (121) est identique à la largeur de l'extrémité du second raccord en T (123), et la largeur de la seconde branche symétrique coudée (125) proche de l'extrémité du guide d'onde commun (130) est identique à la largeur du guide d'onde commun (130), permettant une transition douce entre chacune des secondes branches symétriques coudées (125) et le guide d'onde commun (130).

2. Le transducteur orthomode selon la revendication 1, dans lequel
la largeur du guide d'onde commun (130) est identique à la largeur du premier guide d'onde rectangulaire (111), la largeur de l'extrémité du premier raccord en T (113) correspond à la moitié de la largeur du guide d'onde commun (130), et chacune des premières branches symétriques coudées (115) proche de l'extrémité du guide d'onde commun (130) adopte une structure à largeur graduée, de sorte que la largeur des extrémités des premières branches symétriques coudées proches du guide d'onde commun (130) augmente progressivement.

3. Le transducteur orthomode selon la revendication 2, dans lequel la première branche symétrique coudée (115) comprend un premier segment droit (117) et un premier segment coudé (119), dans lequel le premier segment droit (117) est connecté à l'extrémité du premier raccord en T (113), une extrémité du premier segment coudé (119) est connectée au premier segment droit (117) et se courbe vers le guide d'onde commun (130) par rapport au premier segment droit (117), l'autre extrémité du premier segment coudé (119) est connectée au guide d'onde commun (130), et le premier segment coudé (119) adopte la structure à largeur graduée, de sorte que la largeur du premier segment coudé (119) augmente progressivement.

4. Le transducteur orthomode selon la revendication 1, dans lequel un guide d'onde carré (170) est en outre disposé entre le guide d'onde commun (130) et le guide d'onde de transition carré-à-rond (140), et un bloc d'isolation métallique (180) est en outre disposé à l'intérieur du guide d'onde commun (130), correspondant à la position centrale du guide d'onde carré.

5. Le transducteur orthomode selon la revendication 1, dans lequel la largeur de l'extrémité du second raccord en T (123) correspond à la moitié de la largeur du guide d'onde commun (130), et chacune des secondes branches symétriques coudées (125) proche de l'extrémité du guide d'onde commun (130) adopte une structure à largeur graduée, de sorte que la largeur des secondes branches symétriques coudées (125) proche du guide d'onde commun (130) augmente progressivement.

6. Le transducteur orthomode selon la revendication 5, dans lequel la seconde branche symétrique coudée (125) comprend un second segment droit (127) et un second segment coudé (129), dans lequel le second segment droit (127) est connecté à l'extrémité du second raccord en T (123), une extrémité du second segment coudé (129) est connectée au second segment droit (127) et se courbe vers le guide d'onde commun (130) par rapport au second segment droit (127), l'autre extrémité du second segment coudé (129) est connectée au guide d'onde commun (130), et le second segment coudé (129) adopte la structure à largeur graduée, de sorte que la largeur du second segment coudé (129) augmente progressivement.

7. Le transducteur orthomode selon la revendication 5, dans lequel le premier raccord en T (113) comporte une première fente triangulaire à sa position de ligne médiane, correspondant à la ligne médiane du premier guide d'onde rectangulaire (111) ; et le second raccord en T (123) comporte une seconde fente triangulaire à sa position de ligne médiane, correspondant à la ligne médiane du second guide d'onde rectangulaire (121).

8. Une alimentation polarisée en double ligne, **caractérisée en ce qu'**elle comprend un cornet corrugué à bride (210) et un transducteur orthomode (100) selon l'une quelconque des revendications 1 à 7, dans lequel le cornet corrugué à bride (210) est connecté au guide d'onde de transition carré-à-rond (140).
